# EUROPÄISCHE PATENTANMELDUNG

(11) **EP 3 700 067 A1**
(43) Veröffentlichungstag der Anmeldung: **26.08.2020**
(21) Anmeldenummer: 19159029.8
(22) Anmeldetag: 25.02.2019
(51) Int. Cl.: H02K 7/00, F16D 1/068

(54) **KOMPLEXES RINGELEMENT MIT ADDITIV AUFGEBRACHTEM VERBINDUNGSELEMENT**

(71) Anmelder: Siemens Aktiengesellschaft, 80333 München (DE)
(72) Erfinder: Seufert, Reiner, 97616 Salz (DE); Vollmer, Rolf, 36129 Gersfeld (DE)

(57) **Zusammenfassung**

Ein komplexes Ringelement (1) weist einen ersten und einen zweiten Ring (2, 3) mit einer jeweiligen Achse auf. Der erste und der zweite Ring (2, 3) sind derart angeordnet, dass ihre Achsen auf einer gemeinsamen Achse (4) liegen und der erste und der zweite Ring (2, 3) in Richtung der gemeinsamen Achse (4) gesehen aneinander angrenzen. Das komplexe Ringelement (1) weist ein Verbindungselement (7) auf, durch das der erste und der zweite Ring (2, 3) miteinander verbunden sind. Das Verbindungselement (7) besteht aus Metall. Es übergreift den ersten und den zweiten Ring (2, 3) an ihren jeweiligen äußeren Mantelflächen (8, 9) in Richtung der gemeinsamen Achse (4) gesehen jeweils teilweise. Das Verbindungselement (7) ist in Umfangsrichtung um die gemeinsame Achse (4) gesehen umlaufend und mittels eines additiven Auftragverfahrens hergestellt.

## Beschreibung

Die vorliegende Erfindung geht aus von einem komplexen Ringelement,
- wobei das komplexe Ringelement einen ersten und einen zweiten Ring mit einer jeweiligen Achse aufweist,
- wobei der erste und der zweite Ring derart angeordnet sind, dass ihre Achsen auf einer gemeinsamen Achse liegen und der erste und der zweite Ring in Richtung der gemeinsamen Achse gesehen aneinander angrenzen,
- wobei das komplexe Ringelement ein Verbindungselement aufweist, durch das der erste und der zweite Ring miteinander verbunden sind,
- wobei das Verbindungselement aus Metall besteht.

In vielen Fällen sollen zwei Ringe über ein Verbindungselement miteinander verbunden werden, so dass die beiden Ringe axial, radial und tangential relativ zueinander fixiert sind. Beispielsweise kann ein Rotor einer elektrischen Maschine ein derartiges komplexes Ringelement aufweisen. Ein derartiges komplexes Ringelement kann im Betrieb der elektrischen Maschine von Vorteil sein.

Im Stand der Technik ist es bekannt, die beiden Ringe konzentrisch anzuordnen und den einen Ring auf den anderen aufzuschrumpfen. Es ist weiterhin bekannt, die beiden Ringe derart anzuordnen, dass sie in Richtung der gemeinsamen Achse gesehen aneinander angrenzen und die beiden Ringe beispielsweise über eine Mehrzahl von Gewindebolzen miteinander verbunden sind, wobei die Gewindebolzen axial verlaufen und in einem geeigneten Abstand kreisförmig um die gemeinsame Achse herum verteilt angeordnet sind. Es ist auch bekannt, eine Kombination von Kraftschluss und Formschluss zu verwenden oder die beiden Ringe miteinander zu kleben, zu schweißen oder zu löten. Soweit erforderlich, wurde in diesem Zusammenhang ein etwaiger Ring aus Keramik zuvor metallisiert, also mit einer Metallschicht versehen.

Die Aufgabe der vorliegenden Erfindung besteht darin, ein komplexes Ringelement zu schaffen, das einfach herstellbar ist und bei dem die beiden Ringe des Ringelements stabil und zuverlässig miteinander verbunden sind.

Die Aufgabe wird durch ein komplexes Ringelement mit den Merkmalen des Anspruchs 1 gelöst. Vorteilhafte Ausgestaltungen des komplexen Ringelements sind Gegenstand der abhängigen Ansprüche 2 bis 8. Anspruch 9 nennt eine bevorzugte Verwendung des komplexen Ringelements.

Erfindungsgemäß wird ein komplexes Ringelement der eingangs genannten Art dadurch ausgestaltet,
- dass das Verbindungselement den ersten und den zweiten Ring an ihren jeweiligen äußeren Mantelflächen in Richtung der gemeinsamen Achse gesehen jeweils teilweise übergreift,
- dass das Verbindungselement in Umfangsrichtung um die gemeinsame Achse gesehen umlaufend ist und
- dass das Verbindungselement mittels eines additiven Auftragverfahrens hergestellt ist.

Das Verbindungselement ist vorzugsweise mittels eines Kaltgasspritzens hergestellt. In diesem Fall kann die Herstellung des Verbindungselements besonders effizient erfolgen.

In der Regel besteht der erste Ring aus Metall, insbesondere aus Stahl. Insbesondere in diesem Fall - aber nicht zwingend beschränkt auf diesen Fall - kann das Verbindungselement mit dem ersten Ring stoffschlüssig verbunden sein. Diese Art der Verbindung stellt die stabilste Form der Verbindung dar. Sie ist daher nach Möglichkeit anzustreben.

Oftmals besteht der zweite Ring aus Keramik. Insbesondere in diesem Fall - aber nicht zwingend - ist das Verbindungselement mit dem zweiten Ring oftmals form- und/oder kraftschlüssig verbunden.

Vorzugsweise weist der erste Ring an seiner Mantelfläche eine erste Kontur auf, die einem Verdrehen des Verbindungselements relativ zum ersten Ring um die gemeinsame Achse einen Widerstand entgegengesetzt. Dadurch kann zwischen dem ersten Ring und dem Verbindungselement ein besonders hohes Drehmoment übertragen werden.

Vorzugsweise weist der zweite Ring an seiner Mantelfläche eine zweite Kontur auf, die einem Verdrehen des Verbindungselements relativ zum zweiten Ring um die gemeinsame Achse einen Widerstand entgegengesetzt. Dadurch kann zwischen dem zweiten Ring und dem Verbindungselement ein besonders hohes Drehmoment übertragen werden.

Das komplexe Ringelement kann insbesondere als Bestandteil eines Rotors einer elektrischen Maschine verwendet werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Teilschnitt durch ein komplexes Ringelement,
- FIG 2: einen ersten und einen zweiten Ring zu Beginn des Herstellens eines Verbindungselements,
- FIG 3: Mantelflächen eines ersten und eines zweiten Rings in abgerollter Darstellung und
- FIG 4: einen Rotor einer elektrischen Maschine.

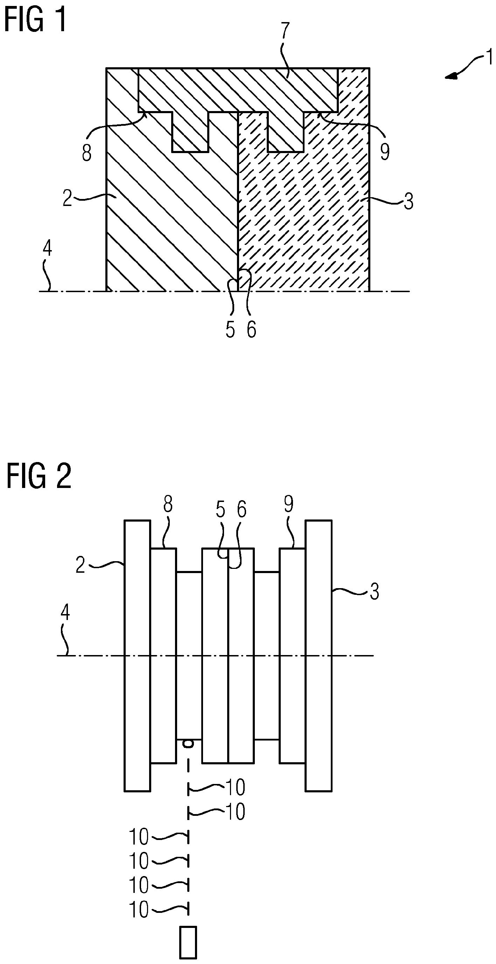

Gemäß FIG 1 weist ein komplexes Ringelement 1 einen ersten Ring 2 und einen zweiten Ring 3 auf. Die beiden Ringe 2, 3 weisen jeweils eine Achse auf. Die beiden Ringe 2, 3 sind entsprechend der Darstellung in FIG 1 derart angeordnet, dass ihre Achsen auf einer gemeinsamen Achse 4 liegen.

Soweit nachfolgend die Begriffe "axial", "radial" und "tangential" verwendet werden, sind sie stets auf die gemeinsame Achse 4 bezogen. "Axial" ist eine Richtung parallel zur gemeinsamen Achse 4. "Radial" ist eine Richtung orthogonal zur Axialrichtung direkt auf die gemeinsame Achse 4 zu oder von ihr weg. "Tangential" ist eine Richtung, die sowohl orthogonal zur Axialrichtung als auch orthogonal zur Radialrichtung verläuft. "Tangential" ist also eine Richtung, die bei einer konstanten Axialposition in einem konstanten radialen Abstand von der gemeinsamen Achse 4 kreisförmig um die gemeinsame Achse 4 herum gerichtet ist.

Die beiden Ringe 2, 3 grenzen in Axialrichtung gesehen aneinander an. Grenzflächen 5, 6 der beiden Ringe 2, 3, an denen die beiden Ringe 2, 3 unmittelbar aneinander anliegen, verlaufen vorzugsweise orthogonal zur gemeinsamen Achse 4.

Das komplexe Ringelement 1 weist weiterhin ein Verbindungselement 7 auf. Durch das Verbindungselement 7 sind die beiden Ringe 2, 3 miteinander verbunden.

Das Verbindungselement 7 besteht entsprechend der Darstellung in FIG 1 aus Metall. Es kann insbesondere aus Stahl bestehen.

Das Verbindungselement 7 übergreift entsprechend der Darstellung in FIG 1 die beiden Ringe 2, 3 an ihren äußeren Mantelflächen 8, 9. Das Übergreifen ist in Richtung der gemeinsamen Achse 4 gesehen jeweils teilweise gegeben. Das Verbindungselement 7 ist also in diesen Bereichen radial außen auf die beiden Ringe 2, 3 aufgebracht. In Umfangsrichtung um die gemeinsame Achse 4 herum ist das Verbindungselement 7 umlaufend. Es ist selbst also ebenfalls ringartig ausgebildet.

Das Verbindungselement 7 ist mittels eines additiven Auftragverfahrens hergestellt. Additive Auftragverfahren sind Verfahren, bei denen das Material, aus dem das Verbindungselement 7 besteht, entsprechend der Darstellung in FIG 2 mittels eines Gasstroms in Form kleiner Dosen 10 (Einzahl: Dosis, nicht Dose) auf den ersten und den zweiten Ring 2, 3 aufgebracht wird. Durch das Auftreffen der kleinen Dosen 10 auf die Ringe 2, 3 bildet sich eine stoffschlüssige oder eine form- und/oder kraftschlüssige Verbindung des Verbindungselements 7 mit den beiden Ringen 2, 3 aus. Welche Art der Verbindung sich ausbildet, hängt von den Materialien ab, aus denen das Verbindungselement 7 und die beiden Ringe 2, 3 bestehen. Nachfolgende Schichten des Verbindungselements 7 verbinden sich mit den bereits aufgebrachten Schichten des Verbindungselements 7 stets stoffschlüssig. Der Kraftschluss wird insbesondere dadurch bewirkt, dass das Verbindungselement 7 beim Aufbringen auf die Mantelflächen 8, 9 der beiden Ringe 2, 3 thermisch erwärmt ist und sich zu einem späteren Zeitpunkt wieder abkühlt und dabei schrumpft.

In vielen Fällen besteht der erste Ring 2 aus Metall, insbesondere aus Stahl. Der erste Ring 2 kann aber auch aus einem anderen Metall bestehen, beispielsweise aus Aluminium oder Titan. Er kann auch aus einem anderen Material bestehen. Im Falle eines Metall als Material für den ersten Ring 2 bildet sich in der Regel eine stoffschlüssige Verbindung aus. In diesem Fall ist also nach dem Herstellen des Verbindungselements 7 das Verbindungselement 7 mit dem ersten Ring 2 stoffschlüssig verbunden. Die stoffschlüssige Verbindung stellt die stabilste Form der Verbindung dar. Sie ist daher nach Möglichkeit anzustreben. Im Einzelfall ist es aber auch möglich, dass die Verbindung des Verbindungselements 7 mit dem ersten Ring 2 form- und/oder kraftschlüssig ist.

In vielen Fällen besteht weiterhin der zweite Ring 3 aus Keramik. Im Falle von Keramik als Material für den zweiten Ring 3, aber auch in manchen anderen Fällen, bildet sich eine form- und/oder kraftschlüssige Verbindung aus. In diesem Fall ist also nach dem Herstellen des Verbindungselements 7 das Verbindungselement 7 mit dem zweiten Ring 3 form- und/oder kraftschlüssig verbunden.

Der Gasstrom, mittels dessen die Dosen 10 aufgebracht werden, weist eine relativ hohe Temperatur auf. Es ist möglich, dass die Temperatur des Gasstroms so hoch ist, dass das Material, aus dem das Verbindungselement 7 besteht, an- oder aufschmilzt. In diesem Fall spricht man von einem sogenannten Thermischen Spritzen, und die Dosen 10 sind oftmals kleine Tröpfchen. Vorzugsweise ist die Temperatur des Gasstroms jedoch niedriger, so dass das Material, aus dem das Verbindungselement 7 besteht, nicht an- oder aufschmilzt. In diesem Fall spricht man von einem sogenannten Kaltgasspritzen, und die Dosen 10 sind kleine Körnchen.

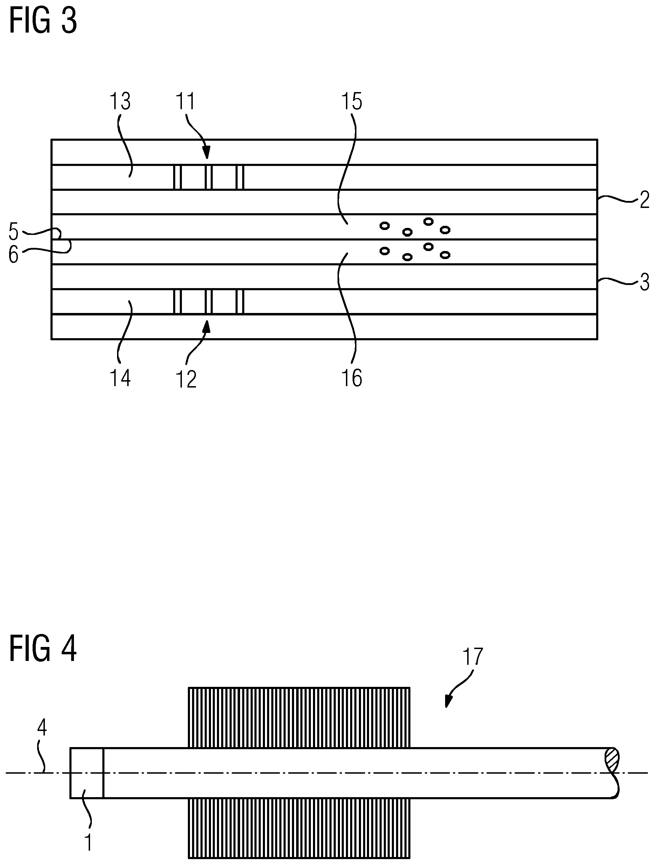

Insbesondere in dem Fall, dass das Verbindungselement 7 mit dem jeweiligen Ring 2, 3 nur eine form- und/oder kraftschlüssige Verbindung ausbildet, weist der jeweilige Ring 2, 3 entsprechend der Darstellung in FIG 3 an seiner Mantelfläche 8, 9 vorzugsweise eine entsprechende Kontur 11, 12 auf, die einem Verdrehen des Verbindungselements 7 relativ zum jeweiligen Ring 2, 3 um die gemeinsame Achse 4 einen Widerstand entgegengesetzt. Die jeweilige Kontur 11, 12 kann beispielsweise, wie in FIG 3 in Bereichen 13, 14 dargestellt, eine Struktur ähnlich einem Zahnrad aufweisen. Es sind aber auch andere Ausgestaltungen für die Konturen 11, 12 möglich. Beispielsweise können die Konturen 11, 12, wie in FIG 3 in Bereichen 15, 16 dargestellt, als kleine lokale Erhebungen und/oder Vertiefungen ausgebildet sein. Auch andere Ausgestaltungen sind möglich. Es darf sich lediglich nicht um tangential um die gemeinsame Achse 4 umlaufende, ringartige Strukturen handeln.

Das komplexe Ringelement 1 der vorliegenden Erfindung kann insbesondere entsprechend der Darstellung in FIG 4 ein Bestandteil eines Rotors 17 einer elektrischen Maschine sein. Insbesondere kann einer der beiden Ringe 2, 3 die Welle des Rotors 17 sein oder mit ihr verbunden sein.

Zusammengefasst betrifft die vorliegende Erfindung somit folgenden Sachverhalt:
Ein komplexes Ringelement 1 weist einen ersten und einen zweiten Ring 2, 3 mit einer jeweiligen Achse auf. Der erste und der zweite Ring 2, 3 sind derart angeordnet, dass ihre Achsen auf einer gemeinsamen Achse 4 liegen und der erste und der zweite Ring 2, 3 in Richtung der gemeinsamen Achse 4 gesehen aneinander angrenzen. Das komplexe Ringelement 1 weist ein Verbindungselement 7 auf, durch das der erste und der zweite Ring 2, 3 miteinander verbunden sind. Das Verbindungselement 7 besteht aus Metall. Es übergreift den ersten und den zweiten Ring 2, 3 an ihren jeweiligen äußeren Mantelflächen 8, 9 in Richtung der gemeinsamen Achse 4 gesehen jeweils teilweise. Das Verbindungselement 7 ist in Umfangsrichtung um die gemeinsame Achse 4 gesehen umlaufend und mittels eines additiven Auftragverfahrens hergestellt.

Die vorliegende Erfindung weist viele Vorteile auf. Insbesondere kann auf einfache, zuverlässige und kostengünstige Weise eine äußerst stabile Verbindung der beiden Ringe 2, 3 des komplexen Ringelements 1 hergestellt werden. Zwischen den Ringen 2, 3 und dem Verbindungselement 7 treten im wesentlichen lediglich axiale Kräfte und Torsionskräfte auf. Ungleichmäßige Druckkräfte und Biegebeanspruchungen werden nahezu vollständig vermieden. Formwerkzeuge zum Herstellen der Verbindung der beiden Ringe 2, 3 miteinander sind nicht erforderlich. Insbesondere, wenn je einer der beiden Ringe 2, 3 aus Stahl und aus Keramik besteht, können die Vorteile beider Werkstoffe genutzt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Komplexes Ringelement,
- wobei das komplexe Ringelement einen ersten und einen zweiten Ring (2, 3) mit einer jeweiligen Achse aufweist,
- wobei der erste und der zweite Ring (2, 3) derart angeordnet sind, dass ihre Achsen auf einer gemeinsamen Achse (4) liegen und der erste und der zweite Ring (2, 3) in Richtung der gemeinsamen Achse (4) gesehen aneinander angrenzen,
- wobei das komplexe Ringelement ein Verbindungselement (7) aufweist, durch das der erste und der zweite Ring (2, 3) miteinander verbunden sind,
- wobei das Verbindungselement (7) aus Metall besteht,
- wobei das Verbindungselement (7) den ersten und den zweiten Ring (2, 3) an ihren jeweiligen äußeren Mantelflächen (8, 9) in Richtung der gemeinsamen Achse (4) gesehen jeweils teilweise übergreift,
- wobei das Verbindungselement (7) in Umfangsrichtung um die gemeinsame Achse (4) gesehen umlaufend ist und
- wobei das Verbindungselement (7) mittels eines additiven Auftragverfahrens hergestellt ist.

2. Komplexes Ringelement nach Anspruch 1,
**dadurch gekennzeichnet,**
**dass** das Verbindungselement (7) mittels eines Kaltgasspritzens hergestellt ist.

3. Komplexes Ringelement nach Anspruch 1 oder 2,
**dadurch gekennzeichnet,**
**dass** der erste Ring (2) aus Metall besteht, insbesondere aus Stahl.

4. Komplexes Ringelement nach Anspruch 1, 2 oder 3,
**dadurch gekennzeichnet,**
**dass** das Verbindungselement (7) mit dem ersten Ring (2) stoffschlüssig verbunden ist.

5. Komplexes Ringelement nach einem der obigen Ansprüche,
**dadurch gekennzeichnet,**
**dass** der zweite Ring (3) aus Keramik besteht.

6. Komplexes Ringelement nach einem der obigen Ansprüche,
**dadurch gekennzeichnet,**
**dass** das Verbindungselement (7) mit dem zweiten Ring (3) form- und/oder kraftschlüssig verbunden ist.

7. Komplexes Ringelement nach einem der obigen Ansprüche,
**dadurch gekennzeichnet,**
**dass** der erste Ring (2) an seiner Mantelfläche (8) eine erste Kontur (11) aufweist, die einem Verdrehen des Verbindungselements (7) relativ zum ersten Ring (2) um die gemeinsame Achse (4) einen Widerstand entgegengesetzt.

8. Komplexes Ringelement nach einem der obigen Ansprüche,
**dadurch gekennzeichnet,**
**dass** der zweite Ring (3) an seiner Mantelfläche (9) eine zweite Kontur (12) aufweist, die einem Verdrehen des Verbindungselements (7) relativ zum zweiten Ring (3) um die gemeinsame Achse (4) einen Widerstand entgegengesetzt.

9. Komplexes Ringelement nach einem der obigen Ansprüche,
**dadurch gekennzeichnet,**
**dass** es als Bestandteil eines Rotors (17) einer elektrischen Maschine verwendet wird.
